# EUROPEAN PATENT SPECIFICATION

(11) **EP 1 506 585 B1**
(45) Date of publication and mention of the grant of the patent: **25.10.2006**
(21) Application number: 03733893.6
(22) Date of filing: 25.04.2003
(51) Int. Cl.: H01M 4/94, H01M 8/02

(54) **CARBON FIBER REINFORCED PLASTIC BIPOLAR PLATES WITH CONTINUOUS ELECTRICAL PATHWAYS**
KOHLENSTOFFASERVERSTÄRKTE BIPOLARE KUNSTSTOFFPLATTEN MIT KONTINUIERLICHEN ELEKTRISCHEN VERBINDUNGSWEGEN
PLAQUES BIPOLAIRES EN MATIERE PLASTIQUE RENFORCEE PAR DES FIBRES DE CARBONE, PRESENTANT DES TRAJECTOIRES ELECTRIQUES CONTINUES

(30) Priority: 23.05.2002 US 155469
(43) Date of publication of application: 16.02.2005
(73) Proprietor: Albany International Techniweave, Inc., Rochester, NH 03867 (US)
(72) Inventor: LECOSTAOUEC, Jean-François, Hooksett, NH 03106 (US)
(74) Representative: Bugnion Genève
(86) International application number: PCT/US2003/012856
(87) International publication number: WO 2003/100892

(56) References cited:
- EP-A- 1 050 915
- WO-A-01/04980
- PATENT ABSTRACTS OF JAPAN vol. 016, no. 334 (C-0964), 21 July 1992 (1992-07-21) & JP 04 097948 A (SHOWA DENKO KK), 30 March 1992 (1992-03-30)

## Description

### Field of the Invention

The present invention is directed towards a method for fabricating carbon fiber reinforced thermoplastic bipolar plate for an electrode in a fuel cell or battery.

### Background of the Invention

The use of carbonaceous material in conjunction with electron collection is well known. The function of the carbon or graphite has primarily been that of an electrical current (a currency) collector. Typically, plates machined from graphite blocks have been used for such applications. This approach is expensive and has dimensional limitations. Thin walls with sufficient mechanical strength cannot be achieved. The current collector, also known as bipolar plate, has been formed from a number of conductive materials in a number of sizes and geometries. The secondary function of a bipolar plate is to provide an impermeable barrier to separate the gases present on either side of the plate. Fine grooves are typically present on one or both surfaces of the bipolar plate to feed and extract the two gas species involved in the device.

In this regard, fuel cells and batteries typically are built by assembling bipolar plates or electrodes and gas diffusion layers. The diffusion layer is commonly built from a carbonaceous fiber arrangement (carbon paper or fabric) impregnated with an ion exchange polymer such as fluoro-based polymers and catalysts. A device of this type can be seen in that set forth in U.S. Patent No. 4,830,938.

In that patent, carbonaceous material is used for the bipolar materials. A number of materials have been used for bipolar plates. These include solid or flexible graphite (see U.S. Patent No. 5,532,083) carbon-carbon composites; thermoset carbon reinforced composites using, for example, carbon fiber reinforcement in an epoxy or phenolic resin; and carbon fiber reinforced fluorocarbon-graphite (see U.S. Patent No.4,339,322).

Others (U.S. Patent No. 6,248,467) have proposed using conductive molding compounds using a mixture of a vinyl ester resin, various grades of graphite powder and short carbon fibers.

Electrical pathways in these various material systems are far from being optimized. Materials, such as graphite-resin compounds need a high graphite powder loading to exhibit acceptable electrical conductivity. The overall conductivity of the material is eventually limited by the plastic rich zones present between the graphite aggregate.

Short carbon fiber reinforcements have been used to increase electrical conductivity and improve mechanical properties of bipolar plates. These reinforced composites, while having higher strength have certain shortcomings. For example, typically the reinforcement used is introduced in the form of random, short carbon fibers or oriented planar fabrics. These material designs and fabrication approaches result in composites with fibers arranged parallel to the in-plane direction of the bipolar plate. In these materials, with little fiber oriented in the through thickness direction, the carbon fiber only slightly contributes to the effective thorough thickness electro-conductivity. In addition, short fiber reinforced composites and unreinforced solid graphite materials exhibit poor or moderate mechanical properties. The fabrication techniques associated with some of these materials are also not easily amenable to the shape forming of small details such as the grooves that are typically present at the surface of the bipolar plates. Accordingly, current bipolar plates have either electrical or thermal property limitations and/or are costly to fabricate. In this regard, the final product usually requires multiple steps in the fabrication process. One attempt to minimize the number of steps in their fabrication process is found, for example, in U.S. Patent No. 5,798,188. This approach is to eliminate the machining of the gas passages in a bipolar plate. The patent discusses the use of injection molding of low viscosity polymer over an aluminum plate to in-situ mold the gas passage of a bipolar plate. Surfaces requiring electrical conductivity are subsequently treated with a metal. In that situation the aluminum plate provides the structural element of the bipolar plate. The molten resin is used to achieve the surface details.

Other approaches to creating a bipolar plate which are intended to improve upon their operation and fabrication include that set forth in the aforesaid U.S. Patent No. 5,532,083. This patent describes a flexible carbonaceous component which through the use of a low modulus (Young's Modulus) carbon fiber, the final state of the fiber in the flexible plate retains its low modulus property. This particular design with a planar arrangement of continuous fibers has a good electro-conductivity in the plane of the bipolar plate but suffers the same insufficient or low through thickness electro-conductivity as the previous approaches.

Accordingly, while there have been improvement on the structure and fabrication of bipolar plates, further improvements in this regard are desirable.

### Summary of the Invention

It is therefore a principal object of the invention to provide a method for fabricating a bipolar plate where carbon fibers are preferentially oriented in the through thickness direction to provide uninterrupted electrical, conductive pathways and maximize electro-conductivity through a stack of plates.

It is a further object of the invention to provide a method for fabricating a bipolar plate, which has superior strength and durability, yet may be relatively thin allowing the introduction of a larger number of plates in a device.

A yet further object of the invention is to provide a method for fabricating a bipolar plate that has improved thermal conductivity to dissipate heat.

A still further object of the invention is to provide a method for fabricating a bipolar plate for which design criteria may be readily changed to meet a particular need.

It is yet another object of the invention to be amenable to a low fabrication cost.

These and other objects and advantages are provided by the present invention. In this regard the present invention envisions a carbon fiber reinforced thermoplastic bipolar plate where the continuous fiber is preferentially oriented for fuel cells or batteries. The starting fiber reinforcement can take on a variety of forms but essentially involves a carbon fiber mat which is woven, non-woven, knit, stitch bonded or a combination of woven, knit, stitch bonded and staple fibers. The mat is subsequently needle punched to orient a large portion of the carbon fibers in the through thickness direction, allowing it to achieve maximum electrical conductivity in the direction where it is the most important. For the bipolar plate, the preferred path is parallel to the plate thickness. Such a carbonaceous mat may include thermoplastic fibers which are then heat molded into the desired shape to create grooves or other surface features heretofore typically achieved by machining. Alternatively, the mats may be impregnated with a thermoplastic resin (powder or solution form) and molded to shape using suitable temperature and pressure.

A wide variety of reinforcements and shapes may be readily fabricated depending upon the particular application. Moreover, the need to machine the surface of the plates is avoided and thus a complicated and difficult task in their production is eliminated. Furthermore, in view of the superior strength, which results from such a construction, the thickness of the plate may be reduced so as to provide for an increased number of elements in a stack of a given height.

### Brief Description of the Drawings

Thus by the present invention, its objects and advantages are realized, the description of which should be taken into conjunction with the drawings wherein:
Figures 1A-1D show a fuel cell stack and examples of bipolar plates configurations.
Figure 2 is a side sectional view of a battery in the prior art, which generally illustrates a construction thereof;
Figure 3 is a side sectional general view of a non-woven reinforcing mat containing carbon fibers prior to needling, incorporating the teachings of the present invention;
Figure 4 is a side sectional view of the mat of Figure 2 after needling, incorporating the teachings of the present invention;
Figure 5 is a side sectional view of a woven mat incorporating woven carbon fibers and staple fibers, prior to needling, incorporating the teachings of the present invention;
Figure 6 is a side sectional view of the mat of Figure 4 after needling, incorporating the teachings of the present invention.
Figure 7 is a side sectional view of a carbon reinforced bipolar plate after being molded into a composite using thermoplastic fibers or resin to create the desired shape, incorporating the teachings of the present invention.

### Detailed Description the Preferred Embodiment

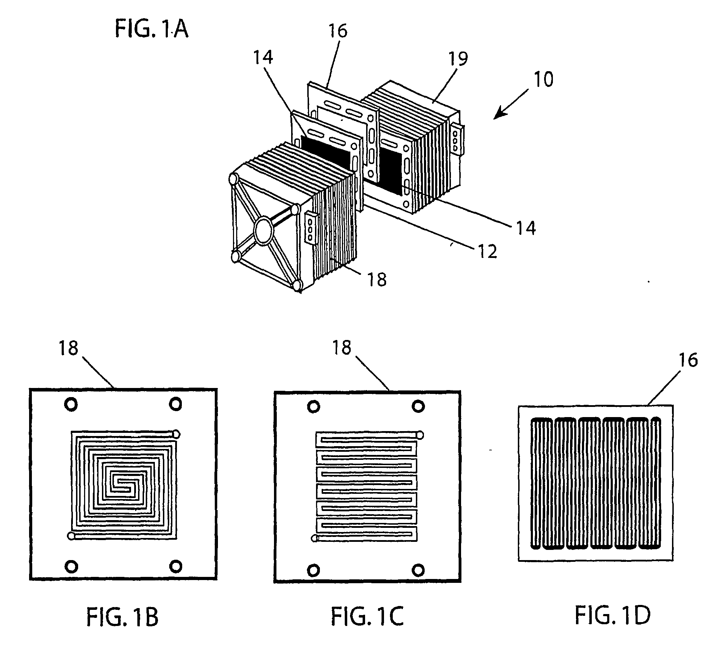

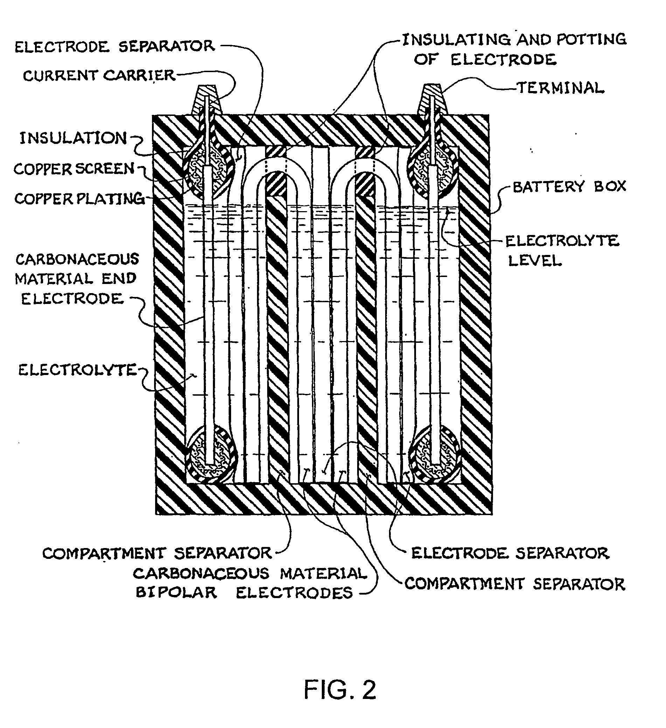

Turning now more particularly to the drawings, Figures 1A-1D and 2 show representative depictions of a fuel cell and battery found in the prior art. Figures 1A-1D describe a typical fuel cell stack 10 where a membrane 12, two catalyzed gas diffusion layers 14 and two bipolar plates 16, an anode 18 and a cathode 19, constitute an elementary cell unit. As hydrogen is fed through the grooves of the anode bipolar plate, and diffuses in the porosity of the GDL (gas diffusion layer), the hydrogen gas is separated into protons (hydrogen ions) and electrons. The electrolyte membrane 12 in the center allows only the protons to pass through the membrane 12 to the cathode 19 side of the fuel cell. As oxygen flows inside the grooves of the cathode bipolar plate, the platinum coating of the GDL helps the protons, the oxygen and electrons to combine and produce water and heat. The electrons released on the anode 18 side cannot travel through the membrane 12, they flow across the wall of the anode bipolar plate into the next cell. The uniformity of the gas flow in the GDL is achieved through different groove designs at the surface of the bipolar plates.

Figure 2 illustrates a battery described in U.S. Patent No. 4,830,938. In this regard and for purposes of generally illustrating a brief description of what is shown therein is as follows.

There typically is provided a case or housing which is impervious to the passage of gas therethrough, including, particularly, water vapor. The case has two internal cell separators defining a series of three cells. The intemals of the cells are pairs of electrodes made from a carbonaceous material, which may be of the type hereinafter discussed. Electrodes are of a dimension such that they can be introduced into an adjacent cell in that portion of the adjacent cell having an opposite polarity. Electrodes are shown as a single piece bent to be insertable into adjacent cells. They can also be two electrodes connected in a manner to conduct current in the same manner as a single piece would. Separating the two electrodes in a cell from electrical contact with each other is a foraminous member, which will at least pass ions. Various forms of membrane like material may be employed, e.g. fiberglass mat, polypropylene scrim or film, ion exclusion membranes and the like.

The preferred electrolyte for such a secondary cell is typically a mixture of an ionizable salt dissolved in a non aqueous non-conducting liquid or paste. Alternatively, the electrolyte may be ionizable to some extent as well as any non-conducting solid through which ions will be transported under the influence of electrical charge and discharge.

The present invention relates to the use of specially designed fibrous carbon preforms that when combined with a thermoplastic polymer can be used to fabricate a low cost fiber reinforced plastic bipolar plate in a one step process. Thermoplastic polymers are preferred, as they offer fast forming of reinforced plastics and do not emit toxic compounds in the resin stage like some thermosets. These plates may be used in fuel cells and batteries of the type, for example, shown in Figures 1A-1D and 2. This approach of orientating the conductive fibers in the most suitable direction, yields bipolar plates exhibiting superior electrical performance than that of current plates.

Orientation of the conductive carbon fibers in the direction parallel to the thickness of the plate promotes improved electrical and thermal conductivity across the bipolar plate and "as-molded" in fine surface details eliminates post forming machining steps and provides two important features in optimizing performance and cost of a fuel cell. This is achieved by thermoforming a three dimensional carbon fiber needled mat containing thermoplastic elements into a composite plate. The carbon fiber, present throughout the thickness of the plate, also provides a mechanical reinforcement in the construction of the bipolar plate, due to its high modulus and allows for thinner bipolar plates which may be used in the assembly of more compact fuel cells.

Along with the privileged orientation of the carbon fibers, the selection of a thermoplastic matrix having similar physical properties as the membrane material should enhance the performance of the fuel cell. It will provide better contact surface due to similar thermal expansions which is conducive to better electrical conductivity and good chemical/physical compatibility. For example, possible adoption of porous polyether etherketone (PEEK) based membranes by the industry could easily be matched by the fabrication of a carbon/PEEK bipolar plate.

The invention utilizes a three-dimensional carbon textile form, for example a needle punched mat, to achieve preferential orientation of the conductive fibers along the direction yielding maximum electronic conductivity. In the case of a bipolar plate, the preferred electronic path is through the plate thickness. Needle punching of short length fibers and/or continuous fibers allows the introduction of a substantial amount of fibers in the direction parallel to the thickness of the preforms. Also, the use of heat-treated pre-oxidized carbon fiber, heat-treated thermoset pitch fiber, carbon PAN fiber or pitch carbon fiber through the thickness of the bipolar plate will optimize electrical and thermal conductivity.

The combination of carbon fiber and a thermoplastic resin or fibers to fabricate in one step, a structural, conductive plate, allows the possibly to fabricate a thin wall bipolar plate to optimize the size of fuel cell packages. The thermoplastic fibers or resin provide the means to achieve an impermeable wall between the feed gases. The combination of carbon fibers with a polymeric matrix yields a composite exhibiting excellent strength and damage tolerance. The polymer may be selected for the particular application to withstand the operating environment of the fuel cell and, in this regard, should be heat and chemical resistant.

For example, the polymer associated with the carbon reinforcement may be any one of the following polymers: polypropylene, polyamide, polyester, fluoropolymers, polyphenylene sulfide (PPS), polyetherimide (PEI), polyether etherketone (PEEK), polyether ketone ketone (PEKK), and any other thermoplastic polymers suitable for the purpose which may be extruded in a fiber form, may be a resin put in a solution form or may be available in a powder form.

Fibrous carbon preforms can be a short length fiber, paper, unidirectional tape, woven and non-woven fabric including knitted, stitch bonded multi-axial fabric, 2 and 3 directional fiber weaves. Lower cost fibers, such as fiberglass or other fillers (carbonaceous conductive and nonconductive fillers) may be combined with the carbon fibers in the needled mat to reduce cost. Processing of the final product is accomplished by a number of thermoforming processes (application of temperature and pressure): diaphragm forming, compression molding, pressure/vacuum forming, resin transfer molding, lamination or stamping to consolidate the thermoplastic matrix.

To achieve the desired orientation of fibers, the carbon mat is subjected to needle punching. Needle punching of carbon fibers is presently used to make thick billets for aircraft brake disks or propulsion hardware. These fibrous carbon preforms are usually prepared from pre-oxidized PAN precursor fibers and are subsequently heat-treated at high temperature to transform the low carbon content fiber into a carbon fiber. The carbonization or graphitization temperature determines the fiber carbon content. During the needling process (or mechanical entangling of the fibers) a certain percentage of fibers are oriented in the direction parallel to the thickness of the preform. The amount of through the thickness fiber is related to the type of needle used and the intensity of needling. Carbonaceous needled preforms may also be directly fabricated from PAN fibers and carbonized pitch fibers.

The present invention envisions the fabrication of thin needle mats directly from graphitized PAN fibers and/or carbonized pitch fibers. An alternative process is the fabrication form pH-oxidized PAN fibers or thermoset pitch fibers. The starting fibers can be in either of two general forms. One is pre-oxidized fibers or thermoset fibers where the fibers are only partially heat-treated. These are sometimes referred to as green fibers. The pre-oxidized fibers require full heat treatment (carbonization and graphitization) prior to the introduction of the thermoplastic. The second form of fibers are those that are fully heat-treated to high temperatures, which allow the introduction of the thermoplastic at an earlier stage. Depending on the state of the carbon fiber, the plastic component of the bi-polar plate is introduced at specific stages of fabrication.

In this regard, the type, length and geometry of the pre-oxidized or thermoset fibers, the needling parameters and the type of needles are selected to fabricate needled preforms exhibiting specific amount of through the thickness fiber and fiber volume. Following heat treatment at selected temperatures of the pre-oxidized PAN or pitch precursor carbon needled mat; the fibrous needle mat can be impregnated with a number of thermoplastic polymers. This is achieved using solution coating and powder-coating processes. High thermal conductivity, inorganic powders may also be introduced within the porosity of the carbon preform during that step. The prepreg mat is ready to be thermoformed to the final geometry of the bipolar plate using a number of thermoforming processes: diaphragm forming, compression forming, pressure / vacuum forming, resin transfer molding or any other forming process suitable for the purpose. The prepreg needled mat may also be formed into a pre-consolidated plate, called a laminate, and subsequently molded to final shape using, for example, stamping.

In the situation where PAN fibers or carbonized pitch fibers are used for the mat which exhibit a high modulus, these are more difficult to needle but can be handled using proper techniques and raw materials. Two approaches may be used to introduce the polymer component in the preform. Where the fibers do not require high temperature treatments, the carbon fibers can actually be blended with thermoplastic fibers prior to fabricating the needled preform. The thermoplastic fiber can be any of the following polymers: polypropylene, polyamide, polyester, polyphenylene sulfide (PPS), polyether etherketone (PEEK), polyether ketone ketone (PEKK), or any other fiber composition suitable for the purpose. The fiber may be preblended with the carbon fiber (co-mingled yarn, co-mingled unidirectional tape, co-mingled fabric, etc.) or mixed and fed to the needling machine with the carbon yarn. The thermoplastic fiber, when melted and subjected to pressure, encapsulates the carbon fibers and allows the formation of very fine surface details upon molding. The thermoplastic fibers become the matrix of the composite bipolar plate.

Another approach is to needle the carbon PAN fiber and subsequently impregnate the porosity of the carbon preform with a selected thermoplastic polymer of the type as aforenoted with regard to the pre-oxidized needled mats. This is achieved using solution coating and powder-coating. The prepreg mat can be thermoformed to the final geometry of the bipolar plate using a number of molding processes such as diaphragm forming, compression forming, resin transfer molding, or pressure/vacuum forming. In addition, the prepreg mat may be formed into a pre-consolidated plate, such as a laminate formed to its final shape by stamping.

The needled carbon PAN mat may also include some filler such as glass fiber to reduce the cost of the preform.

As aforenoted, the fabrication of bipolar plates may take on other forms of carbon fiber preform. For example chopped carbon fiber mixed with a thermoplastic resin; unidirectional tapes, 2D fabrics, 3D weave fabric directly assembled in an organized hybrid textile including thermoplastic fibers or subsequently impregnated with a thermoplastic resin may also be used to fabricate reinforced thermoplastic bipolar plates with fine details.

When carbon fibers, exhibiting in their final form a high modulus (i.e. greater than 33 MSI), it is desirable to start with a low modulus fiber to achieve a needled preform with the highest possible amount of through the thickness fiber, since barbs from the needles tend to cut high modulus fibers and the transfer efficiency is quite poor.

Accordingly the needle punching of the carbon fibers into a preform, would benefit from a low fiber modulus. Pre-oxidized PAN fibers, thermoset pitch fibers or low carbonization temperature pitch fibers are desirable low modulus fibers to begin with to optimize fiber transfer through the thickness. Some specific PAN higher modulus fibers may also be used, with, however, a lesser effectiveness. Depending on the starting fibers, the preforms may be subjected to further heat treatments to raise the carbon content of the fiber.

Electrical conductivity in carbon fiber is related to both the nature of the carbon source and to the level of graphitization the fiber is subjected to. Pitch based fibers are, for example, better conductors than PAN based fibers and heat treatment of the preform will have a two-fold benefit: increase the electrical conductivity, and also raise the modulus. In a fuel cell application, ultimately higher modulus fibers in the end are desirable to raise the stiffness of the bipolar plates.

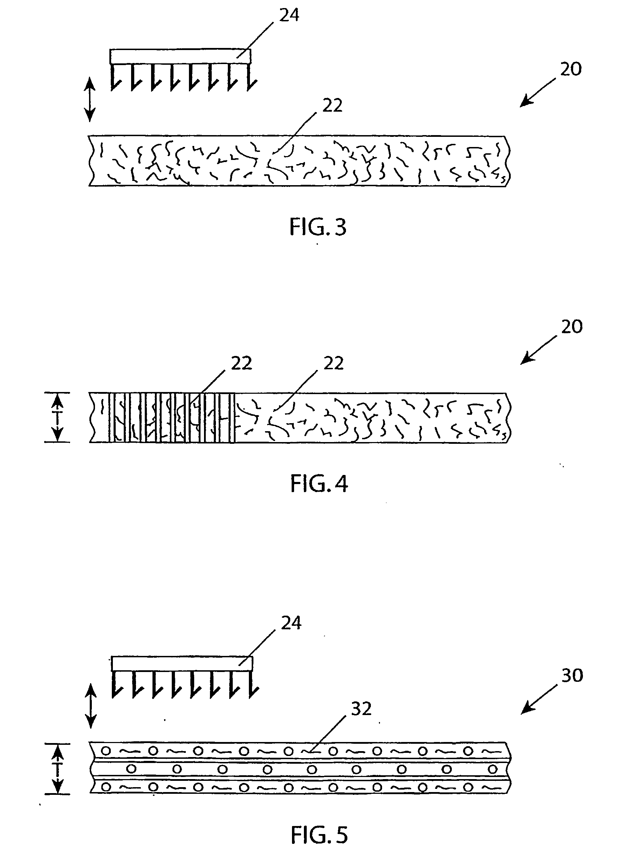

With the foregoing in mind Figures 3 through 7 illustrate the carbon mat 20 of the present invention. Figure 3 shows a non-woven mat made out of carbon fibers 22. The carbon fibers 22 are randomly oriented. Included in the mat as aforenoted might be thermoplastic fiber or filler fibers. So as to properly orientate the fibers, particularly the carbon fibers 22, the mat 20 is needle punched by way of a needling device 24 which is generally illustrated and is well known in the art. In Figure 4, there is generally shown the fiber orientation after needle punching a portion of the mat 20. In this regard, the fibers, particularly the carbon fibers 22 are oriented parallel to the thickness T of the mat 20. The number of fibers so oriented will depend upon the degree to which the needle punching is done. Obviously, the highest number of carbon fibers so oriented is most desirable and the entire mat 22 is subject to needle punching. If the mat 20 comprises fibers in need of further carbonization, then it can be treated accordingly to effect the same. Once this is completed, the mat 20 would, if it contains thermoplastic fibers, be subject to being shaped by thermoforming or other means suitable for the purpose into a composite.

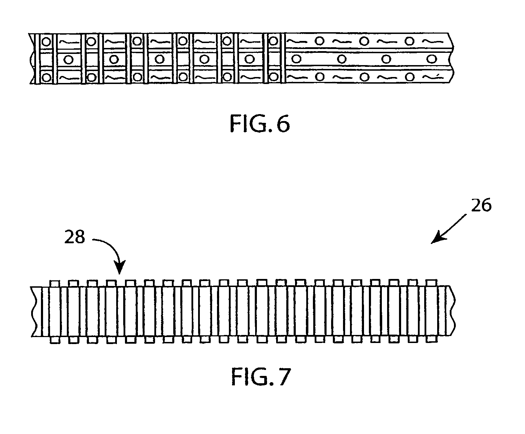

If thermoplastic fibers are not used to create the matrix of the composite, alternatively the mat 20 can be impregnated with an appropriate thermoplastic polymer, which is then processed in a manner as aforenoted into a composite. The composite forms the bipolar plate 26 generally illustrated in Figure 7. In this regard the plate 26 can be provided as part of the molding process (e.g. thermoforming with a surface configuration 28 of a desirable nature. The resulting product is a bipolar plate 26, which has oriented carbon fibers in a matrix having the desired surface configuration. The plate 22 is mechanically rigid, impermeable, highly conductive and of the desired shape with the need for machining all but eliminated.

Turning now to Figures 5 and 6, they are directed to a mat 30 which is woven, knitted or of another construction using yarns of suitable material (e.g. carbon, etc.). The weave pattern may be any one suitable for the purpose. The mat 30 includes staple fiber made of carbon 32 and/or other material as aforesaid. The mat 30 is needle punched by way of the needling device 24 which serves to orientate the fibers in the desired direction (i.e. parallel to the mat's thickness T. The resulting mat 30 is shown in Figure 6. The mat 30 can then be processed in a manner as aforenoted with regard to mat 20.

Thus it can be seen that a bipolar plate can be fabricated having a superior structure and characteristic whilst avoiding the need for machining the surface. Also, due to the mechanical strength of such a reinforced composite structure, it may be relatively thin so as to allow for compact stacking and otherwise reduce fuel cell size. Also, since the bipolar plate is molded, in addition to being able to mold in surface configurations, the plate itself can be molded into different shapes to meet differing applications adding to the versatility of the design.

Thus by the present invention, its objects and advantages have been realized, and although preferred embodiments have been disclosed and described herein, its scope should not be limited thereby; rather its scope should be determined by that of the appended claims.

## Claims

1. The method of fabricating an electrical conductive article for use as an electrode in a fuel cell or battery comprising the steps of: creating a structure having electrically conductive carbonized or graphitized reinforcement fibers; mechanically orienting said fibers by needling in a first direction corresponding to the preferred electrical pathways thereby increasing a conductivity of said article in said first direction; wherein the carbonized or graphitized reinforcement fibers comprise a porous structure impregnated with a thermoplastic polymer, thereby creating a matrix having a thickness with said first direction being parallel to said thickness.

2. The method as claimed in claim 1, wherein the structure also comprises filler fibers.

3. The method as claimed in claim 1 or 2, wherein said carbonized or graphitized fibers are taken from the group consisting of graphitized PAN fibers and carbonized pitch fibers.

4. The method as claimed in one of previous claims , wherein the polymer is taken from the group consisting of polypropylene, polyamide, polyester, polyphenylene sulfide (PPS), polyetherimide (PEI), polyether etherketone (PEEK), polyether ketone ketone (PEKK), and other thermoplastic polymers.

5. The method as claimed in one of previous claims , wherein said carbonized or graphitized fibers are in a form of a mat in which the fibers are mechanically orientated so as to be parallel to the thickness with the mat having a construction of fibers taken from the group consisting of woven, woven with staple fibers, non-woven, knitted, stitch bonded, uni-directional tape, paper and other three dimensional (3D) structures.

6. The method as claimed in one of previous claims, wherein the matrix is formed by a process taken from the group consisting of thermoforming, diaphragm forming, compression molding, resin transfer molding, pressure and vacuum forming, lamination or stamping.

7. The method as claimed in claim 6, wherein the matrix has a surface having a configuration thereon formed using one or more of said processes.

## Patentansprüche

1. Verfahren zur Herstellung eines elektrisch leitenden Gegenstandes zur Verwendung als Elektrode in einer Brennstoffzelle oder -zellenbatterie, mit folgenden Schritten:
Erzeugung einer Struktur mit elektrisch leitenden, carbonisierten oder graphitierten Verstärkungsfasern;
mechanische Orientierung der genannten Fasern durch Vernadeln in einer ersten Richtung, die dem bevorzugten elektrischen Leitungsweg entspricht, wodurch die Leitfähigkeit des genannten Gegenstandes in der genannten ersten Richtung erhöht wird;
wobei die carbonisierten oder graphitierten Verstärkungsfasern eine poröse Struktur aufweisen, die mit einem thermoplastischen Polymer imprägniert ist, wodurch eine Matrix mit einer Dicke gebildet wird und wobei die genannte erste Richtung parallel zu dieser Dicke verläuft.

2. Verfahren nach Anspruch 1, bei dem die Struktur zusätzlich Füllstofffasern enthält.

3. Verfahren nach Anspruch 1 oder 2, bei dem die genannten carbonisierten oder graphitierten Fasern aus der Gruppe entnommen werden, die graphitierte PAN-Fasern und graphitierte Pechfasern umfasst.

4. Verfahren nach einem der vorstehenden Ansprüche, bei dem das Polymer aus der Gruppe entnommen wird, die Polypropylen, Polyester, Polyphenylensulfid (PPS), Polyetherimid (PEI), Polyether-etherketon (PEEK), Polyetherketon-keton (PEKK) und andere thermoplastische Polymere umfasst.

5. Verfahren nach einem der vorstehenden Ansprüche, bei dem die genannten carbonisierten oder graphitierten Fasern in Form einer Matte vorliegen, in der die Fasern mechanisch orientiert werden, derart, dass sie parallel zur Dicke gerichtet sind, wobei die Matte eine Faserkonstruktion aus der Gruppe ist, die Gewebe, Stapelfasergewebe, Non-wovens, Gestricke, Nähgewirke, unidirektionale Bänder, Papier und andere dreidimensionale (3D-)Strukturen umfasst.

6. Verfahren nach einem der vorstehenden Ansprüche, bei dem die Matrix nach einem Verfahren erhalten wird, das aus der Gruppe entnommen wird, die das Warmformen, das Membranformen, den Druckguss, das Harzübertragungsformen, das Formen unter Druck und Vakuum, das Laminieren und das Prägepressen umfasst.

7. Verfahren nach Anspruch 6, bei dem die Matrix eine Oberfläche aufweist, deren Konfiguration durch ein oder mehrere der genannten Verfahren gebildet wird.

## Revendications

1. Procédé de fabrication d'un article électriquement conducteur pour l'utilisation comme électrode dans une pile à combustible ou une batterie de piles à combustible, comprenant les étapes suivantes ;
la création d'une structure comprenant des fibres de renforcement électriquement conductrices carbonisées ou graphitées ;
l'orientation mécanique desdites fibres par un aiguilletage selon une première direction correspondant aux voies électriques préférées ce qui augmente une conductibilité dudit article selon ladite première direction,
les fibres de renforcement électriquement conductrices carbonisées ou graphitées comprenant une structure poreuse imprégnée d'un polymère thermoplastique ce qui crée une matrice ayant une épaisseur, ladite première direction étant parallèle à ladite épaisseur.

2. Procédé selon la revendication 1, dans lequel la structure comprend également des fibres de remplissage.

3. Procédé selon la revendication 1 ou 2, dans lequel lesdites fibres carbonisées ou graphitées sont prises dans le groupe formé par des fibres PAN graphitées et des fibres de brai carbonisées.

4. Procédé selon l'une des revendications précédentes, dans lequel le polymère est pris dans le groupe formé par le polypropylène, le polyamide, le polyester, le sulfure de polyphenylène (PPS), le polyétherimide (PEI), la polyéther-éthercétone (PEEK), la polyéthercétone-cétone (PEKK), et d'autres polymères thermoplastiques.

5. Procédé selon l'une des revendications précédentes, dans lequel lesdites fibres carbonisées ou graphitées se trouvent sous la forme d'un mat dans lequel les fibres sont orientées mécaniquement pour être parallèles à l'épaisseur, le mat présentant une construction de fibres prise dans le groupe formé par les structures tissées, tissées en fibres discontinues, non tissées, tricotées, cousues-tricotées, en mèches unidirectionnelles, en papier et d'autres structures tridimensionnelles (3D).

6. Procédé selon l'une des revendications précédentes, dans lequel la matrice est obtenue par un procédé pris dans le groupe formé par le thermoformage, le formage par diaphragme, le moulage par compression, le moulage par transfert de résine, le formage par pression et dépression, le laminage, et l'étampage.

7. Procédé selon la revendication 6, dans lequel la matrice présente une surface sur laquelle se trouve une configuration formée en utilisant un ou plusieurs desdits procédés.
